# EUROPÄISCHE PATENTSCHRIFT

(11) **EP 0 795 471 B1**
(45) Veröffentlichungstag und Bekanntmachung des Hinweises auf die Patenterteilung: **19.09.2001**
(21) Anmeldenummer: 97103810.4
(22) Anmeldetag: 07.03.1997
(51) Int. Cl.: B64G 1/44

(54) **Vorrichtung zum Entfalten von zwei Paneelen für Solargeneratoren**
Device for deploying two panels for solar generators
Dispositif pour le déploiement de deux panneaux pour générateur solaire

(30) Priorität: 15.03.1996 DE 19610297
(43) Veröffentlichungstag der Anmeldung: 17.09.1997
(73) Patentinhaber: Astrium GmbH, 81663 München (DE)
(72) Erfinder: Stich, Walter, Dipl.-Ing., 83714 Miesbach (DE); Stöckle, Axel, Dipl.-Ing., 88090 Immenstaad (DE)
(74) Vertreter: Baum, Wolfgang, Dipl.-Ing.

(56) Entgegenhaltungen:
- EP-A- 0 578 176
- DE-A- 3 418 413
- DE-A- 4 032 112
- DE-A- 4 337 968
- DE-C- 3 927 941
- US-A- 4 880 188

## Beschreibung

Die Erfindung betrifft eine Vorrichtung zum Entfalten von zwei Paneelen für Solargeneratoren gemäß dem Oberbegriff des Anspruchs 1.

Bekannte Solargeneratoren bilden nach dem Entfalten der Paneele eine starre Fläche. Das Entfalten der Paneele erfolgt z.B. entsprechend der DE-PS 2 021 580 durch ein Zugmittelgetriebe. Die Scharniere rasten dabei nach dem vollständigen Entfalten ein, ohne Möglichkeit einer zusätzlichen Schwenkbewegung. So ein Scharnier ist z.B. bekannt durch die DE 32 15 431 C2. Es ist aber sehr wünschenswert, daß die Paneele, oder zumindest ein Teil der Paneele, bei bestimmten Positionen dem Sonnenstand nachgeführt werden können.

Der Erfindung liegt die Aufgabe zugrunde, eine Vorrichtung zum Entfalten von Paneelen zu schaffen, welche nach dem vollständigen Entfalten der Paneele die Möglichkeit bietet, bei einem Solargenerator einen Teil der Gesamtflächen der Paneele dem Sonnenstand nachzuführen.

Diese Aufgabe wird durch die im Anspruch 1 gekennzeichneten Merkmale gelöst. Vorteilhafte Ausgestaltungen der Erfindung sind in den Unteransprüchen gekennzeichnet.

Der wesentliche Vorteil der Erfindung besteht darin, daß die Vorrichtung zum Entfalten der beiden Paneele einen Entkoppelungsmechanismus einschließt, mit dem nach dem Entfalten der Paneele die Gelenkachse von dem Zugmittelgetriebe trennbar und ein Schwenken der direkt mit der Gelenkachse verbundenen und der weiteren über das Zugmittelgetriebe verbundenen Paneele möglich ist. Auf diese Weise können wahlweise bei einem Solargenerator alle Paneele oder nur ein Teil derselben kontinuierlich dem Sonnenstand nachgeführt werden. Dabei erfolgt nach dem Entkoppeln der mit der Vorrichtung verbundenen Paneele das Schwenken derselben mit Hilfe eines auf der Drehachse angeordneten Stellmotors durch an den Stellmotor übermittelte Impulse.

Die Erfindung wird nachstehend anhand der Zeichnung näher erläutert. Es zeigen:
- Fig. 1: eine Vorrichtung zum Entfalten von zwei Paneelen für Solargeneratoren im zusammengefalteten Zustand;
- Fig. 2: eine Vorrichtung nach Fig. 1 mit halb entfalteten Paneelen;
- Fig. 3: die Vorrichtung nach Fig. 1 mit voll entfalteten Paneelen;
- Fig. 4: eine perspektivische Ansicht der Vorrichtung bei voll entfalteten Paneelen wie bei Fig. 3;
- Fig. 5 und 6: Ansichten der Vorrichtung, bei denen die rechte Paneele in zwei verschiedenen Positionen dem Sonnenstand nachgeführt ist.

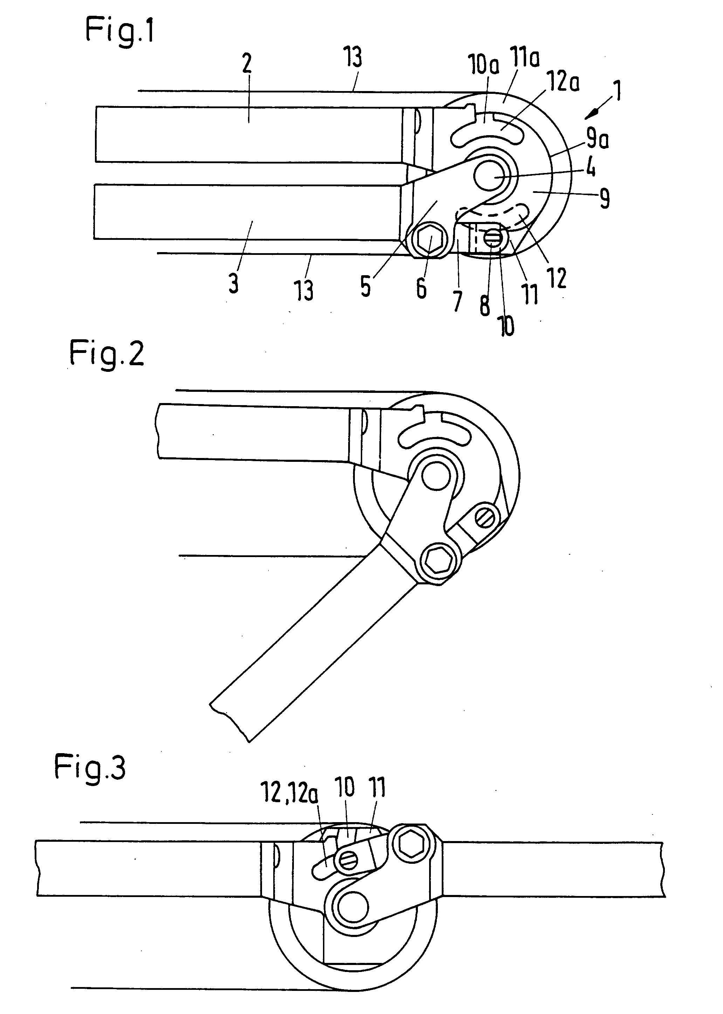

Fig. 1 zeigt eine Vorrichtung 1, die zum Entfalten von zwei Paneelen 2 und 3 dient, in zusammengefaltetem Zustand. Die Vorrichtung 1 mit den Paneelen 2 und 3 sind Teile eines Sonnengenerators für Satelliten. Die Vorrichtung 1 hat eine mittlere Gelenkachse 4, um die ein Lagerträger 5 schwenken kann, der mit der Paneele 3 starr verbunden ist. Der Lagerträger 5 weist eine Lagerachse 6 für einen Fingerhebel 7 auf, der gelenkig auf der Lagerachse 6 gelagert ist und am seinem Ende mit einem parallel zur Gelenkachse 4 angeordneten verschiebbar gelagerten Bolzen 8 versehen ist. Mit der Paneele 2 ist eine Kurvenscheibe 9 mit Kurvenrand 9a verbunden. Der Bolzen 8 greift in einen hier nur andeutungsweise ersichtlichen Schlitz 10 einer Scheibe 11, die mit einer Seilscheibe 11a verbunden ist. Der Schlitz 10 läuft in eine Nut 12 aus. Am oberen Ende der Kurvenscheibe 9 ist ein kürzerer Schlitz 10a mit gleicher Nut 12a vorhanden. Auf die Seilscheibe 11a ist ein Seil 13 gelegt, welches als Teil eines Zugmittelgetriebes zu anderen Seilscheiben des Solargenerators führt. In Fig. 2 ist die Paneele 3 in halb entfaltetem Zustand dargestellt, wobei der Bolzen 8 auf dem Kurvenrand 9a entlang geführt ist und über den Schlitz 10 die Scheibe 11 mitnimmt. Fig. 3 zeigt die Paneele 3 in voll entfaltetem Zustand, wobei der Bolzen 8 über die Schlitze 10 und 10a in die Nuten 12 und 12a eingefahren ist.

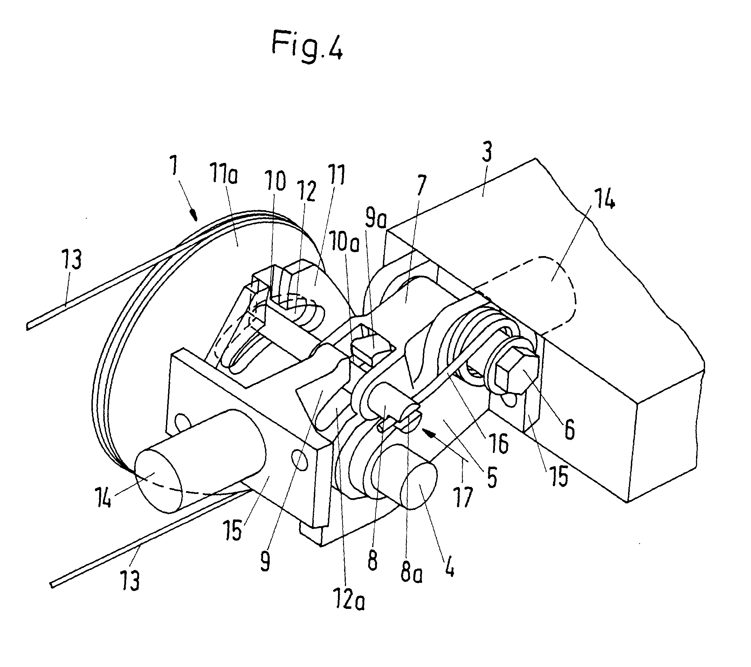

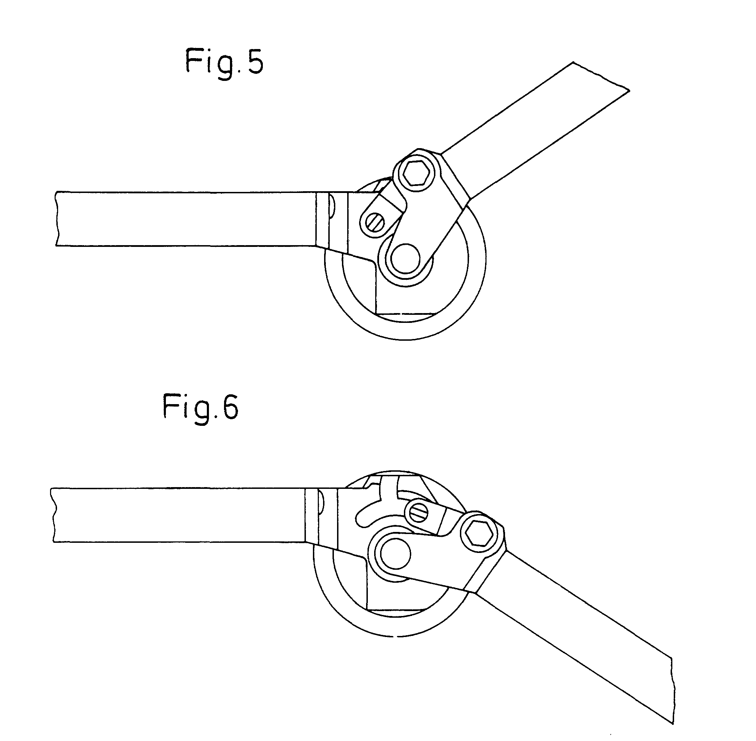

Aus der perspektivischen Darstellung nach Fig. 4 sind weitere Einzelheiten der Vorrichtung 1 ersichtlich. Hierbei ist wegen der besseren Übersichtlichkeit die Paneele 2 fortgelassen. Die Vorrichtung 1 wird in den Paneelen 2 und 3 mit Hilfe von Lagerbolzen 14 durch Kleben und mit die Lagerbolzen 14 tragenden Querträgern 15 durch Schrauben befestigt. Auf der Lagerachse 6 ist eine Feder 16 gesetzt, die mit ihrem Ende in einen Schlitz 8a des Bolzens 8 greift und letzteren in Richtung eines Pfeiles 17 drücken kann. Beim Entfalten der Paneele 3 drückt die Feder 16 somit den Bolzen 8 gegen den Kurvenrand 9a der Kurvenscheibe 9 und schließlich in der Endstellung über die Schlitze 10 und 10a in die Nuten 12 und 12a. Wenn sich der Bolzen 8 in den Nuten 12 und 12a befindet, ist die Vorrichtung 1 von dem Zugmittelgetriebe entkoppelt und es besteht die Möglichkeit, durch Drehen der Gelenkachse 4, z.B. mit Hilfe eines Stellmotors, die Paneele 3 in den Nuten 12 und 12a frei zu bewegen, um die Paneele 3 und andere durch das Zugmittelgetriebe mit verbundene Paneele dem Sonnenstand nachzuführen. Die Fig. 5 und 6 zeigen die möglichen Endstände der Anschläge von dem Paneel 3.

## Patentansprüche

1. Vorrichtung zum Entfalten von zweigelenkig miteinander verbundenen Paneelen (2, 3) für Solargeneratoren an Satelliten, die mit einer Gelenkachse (4) versehen ist und die mit anderen weiteren Einrichtungen zur Entfaltung von Paneelen über ein mit Seilscheiben (11a) versehenes Zugmittelgetriebe verbunden ist, **gekennzeichnet durch** einen Entkoppelungsmechanismus, mit dem nach dem Entfalten der einen um die Gelenkachse (4) schwenkbaren Paneele (3) die Gelenkachse (4) von dem Zugmittelgetriebe trennbar und ein Schwenken der entfaltbaren Paneele (3) und von weiteren über das Zugmittelgetriebe verbundenen Paneele möglich ist.

2. Vorrichtung nach Anspruch 1, **dadurch gekennzeichnet**,
daß eine durch einen Lagerträger (5) mit der Gelenkachse (4) verbundene Lagerachse (6) angeordnet ist, in der gelenkig ein Fingerhebel (7) gelagert ist,
daß am Ende des Fingerhebels (7) ein parallel zur Gelenkachse (4) angeordneter Bolzen (8) eingesetzt ist,
daß der Bolzen (8) beim Schwenken der Paneele (3) um die Gelenkachse (4) mit seinem der Seilscheibe (11a) zugewandten Ende durch eine Feder (16) auf einen Kurvenrand (9a) einer mit der Seilscheibe (11a) verbundenen Kurvenscheibe (9) drückbar ist,
daß nach beendetem Entfalten der Paneele (3) der Bolzen (8) durch die Feder (16) in eine sowohl in der Kurvenscheibe (9) als auch in der Seilscheibe (11a) befindliche Nut (12) gedrückt wir und
daß durch Drehen der Gelenkachse (4) sich die entfaltete Paneele (3) um einen der Länge der Nut (12) entsprechenden Winkel gegenüber der anderen Paneele (2) schwenken läßt.

3. Vorrichtung nach Anspruch 2, **dadurch gekennzeichnet, daß** das Drehen der Gelenkachse (4) durch einen Stellmotor erfolgt und durch einen Impuls ausgelöst wird.

## Claims

1. Device for deploying two mutually articulated panels (2, 3) for solar generators on satellites, which device is provided with an articulation shaft (4) and is connected by way of a flexible drive provided with rope pulleys (11a) to other further devices for deploying panels, **characterised by** an uncoupling mechanism by means of which, after the deployment of the one panel (3) pivotable about the articulation shaft (4), the articulation shaft (4) can be disconnected from the flexible drive and it is possible to pivot the deployable panel (3) and further panels connected by way of the flexible drive.

2. Device according to claim 1, **characterised in that** there is provided a bearing shaft (6) which is connected by a bearing carrier (5) to the articulation shaft (4) and in which a finger lever (7) is supported in an articulated manner, in that a bolt (8) arranged parallel with the articulation shaft (4) is inserted at the end of the finger lever (7), in that, when the panel (3) is pivoted about the articulation shaft (4), the bolt (8) can be urged, by its end facing the rope pulley (11a), by a spring (16) onto a curved edge (9a) of a cam disc (9) connected to the rope pulley (11a), in that, when the deployment of the panel (3) is complete, the bolt (8) is urged by the spring (16) into a groove (12) which is located both in the cam disc (9) and in the rope pulley (11a), and in that, as a result of the rotation of the articulation shaft (4), the deployed panel (3) can be pivoted relative to the other panel (2) through an angle corresponding to the length of the groove (12).

3. Device according to claim 2, **characterised in that** the rotation of the articulation shaft (4) is effected by a servomotor and is triggered by a pulse.

## Revendications

1. Dispositif de déploiement de deux panneaux (2, 3) reliés par articulation d'un générateur solaire de satellite, ce dispositif comportant un axe d'articulation (4) et étant relié à d'autres installations pour déployer les panneaux par un moyen d'entraînement par câble muni d'une poulie à câble (11a),
**caractérisé par**
un mécanisme de découplage qui, après déploiement de l'un des panneaux (3) pivotant autour de l'axe d'articulation (4) permet de séparer l'axe d'articulation (4) de l'entraînement par câble et permet un basculement du panneau déployable (3) ainsi que d'autres panneaux reliés par la transmission à câble.

2. Dispositif selon la revendication 1,
**caractérisé en ce qu'**
- un axe de palier (6) est relié à l'axe d'articulation (4) par un support de palier (5), et reçoit de manière articulée un levier à doigt (7),
- à l'extrémité du levier à doigt (7) se trouve un goujon (9) parallèle à l'axe d'articulation (4),
- lors du basculement du panneau (3) autour de l'axe d'articulation (4), le goujon (8) est poussé par son extrémité tournée vers la poulie à câble (11a), par un ressort (16) contre un bord (9a) du disque à came (9) relié à la poulie (11a),
- après la fin du déploiement du panneau (3), le goujon (8) est poussé par le ressort (16) dans une rainure (12) qui se trouve à la fois dans le disque à came (9) et dans la poulie (11a), et
- en tournant l'axe d'articulation (4), on peut basculer le panneau déployé (3) d'un angle correspondant à la longueur de la rainure (12) par rapport à l'autre panneau (2).

3. Dispositif selon la revendication 2,
**caractérisé en ce que**
la rotation de l'axe d'articulation (4) est assurée par un moteur d'actionneur et est déclenchée par une impulsion.
